# EUROPEAN PATENT SPECIFICATION

(11) **EP 4 645 554 B1**
(45) Date of publication and mention of the grant of the patent: **26.08.2026**
(21) Application number: 24173990.3
(22) Date of filing: 03.05.2024
(51) Int. Cl.: H01M 50/262, H01M 50/264

(54) **LATCH SYSTEM FOR STACKABLE OBJECTS**
VERRIEGELUNGSSYSTEM FÜR STAPELBARE GEGENSTÄNDE
SYSTÈME DE VERROUILLAGE POUR OBJETS EMPILABLES

(43) Date of publication of application: 05.11.2025
(73) Proprietor: VOLVO TRUCK CORPORATION, 405 08 Göteborg (SE)
(72) Inventor: Angelin, Simon, 442 96 KODE (SE)
(74) Representative: Ström & Gulliksson AB

(56) References cited:
- EP-B1- 3 841 629
- CN-U- 216 250 992
- JP-B2- 5 252 836
- US-A1- 2017 324 074

## Description

### TECHNICAL FIELD

The disclosure relates generally to latch systems. In particular aspects, the disclosure relates to latch systems for stackable objects. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Securing stackable objects to each other is associated with a number of challenges. This is particularly the case within the fields of vehicles and in particular with regards to heavy vehicles. Due to the demanding conditions stackable objects in the form of for example batteries needs to be tightly secured to each other. In the past this has been achieved by brackets on each stackable object bolted into the walls of said object. As a result, each stackable object has to be interconnected to the next one by means of mounting the same bracket. This makes the securing and demounting of the objects time consuming and cumbersome. Alternatively, long threaded guides or bolts extending through all of the stackable objects has been utilized. Such a solution may be expensive, require particular components and does not allow for any flexibility in terms of how many objects that should be stacked on top of each other.

EP 3 841 629 B1 teaches a battery pack of a naval ship comprising at least one locking member. CN 216 250 992 U teaches a battery module installation structure.

A need for improvement within the field has been identified.

### SUMMARY

According to a first aspect of the disclosure, a latch system for retaining a plurality of stackable objects in a stacked configuration is provided. The latch system comprises a plurality of interlockable latch devices, wherein the interlockable latch devices comprises a first member having a first member first portion and a first member second portion, wherein the first member first portion is provided with a first member first engagement portion and the first member second portion is provided with a first member second engagement portion adapted to engage an engagement element of one stackable object of the plurality of stackable objects. The latch devices further comprises a second member having a second member first portion and a second member second portion, wherein the second member first portion is provided with a second member first engagement portion adapted to be brought into engagement with a first member first engagement portion of another interlockable latch device. The first member and the second member are arranged to be pivotable relative each other about a latch pivot axis provided between the first member first portion and the first member second portion of the first member and at the second member second portion of the second member, wherein the first member second engagement portion is, in a locked configuration, arranged radially offset from the latch pivot axis and at an angle greater than 0° relative to the second member. The first aspect of the disclosure may seek to achieve a more simple and user friendly manner of securing stackable objects in a stacked configuration. A technical benefit may include that the latch system enables securing of the stackable objects without requiring complex mounting interfaces or threaded fasteners for each stackable object. Another technical benefit may include that the latch system enables an operator to in a simple and non-complex manner add or remove stackable objects in the stack. Yet another technical benefit may include that the positioning of the first member second engagement portion allows for the resiliency of the latch device to provide a clamping force securing the stackable objects relative to each other without requiring for example threaded fasteners.

Optionally in some examples, including in at least one preferred example, the first member first engagement portion may be a hook member and the second member first engagement portion may be a bar member. A technical benefit may include that a non-complex and durable engagement may be achieved.

Optionally in some examples, including in at least one preferred example, the first member second engagement portion may be a bar member. A technical benefit may include that a non-complex and durable engagement may be achieved.

Optionally in some examples, including in at least one preferred example, the first member may be configured with a u-shaped cross-section at the first member first portion and/or the first member second portion. A technical benefit may include that the latch device may be produced by means of punching and bending, allowing for a more cost-efficient latch device.

Optionally in some examples, including in at least one preferred example, a width extension along and at the pivot axis of the first member may be less than a corresponding width extension along and at the pivot axis of the second member. A technical benefit may include that the latch device is more compact. Another technical benefit may include that a less complex and more cost-efficient pivot connection may be utilized for connecting the first and second member.

Optionally in some examples, including in at least one preferred example, the first member and the second member may be arranged to pivot relative each other by a pivot pin pivotably connecting the first member and the second member. A technical benefit may include that the latch device may be more cost-efficient and durable.

Optionally in some examples, including in at least one preferred example, the first member and the second member may be arranged to pivot relative each other by one or more rivets pivotably connecting the first member and the second member. A technical benefit may include that the latch device may be more cost-efficient and durable. Another technical benefit may include that a pivot may offer additional strength compared to other types of pivot connections.

Optionally in some examples, including in at least one preferred example, the latch system may further comprise an end latch device comprising an end member having an end member first portion and an end member second portion. The end member first portion may be provided with an end member first engagement portion corresponding to the first member first engagement portion and the end member second portion may be provided with an end member second engagement portion corresponding to the first member second engagement portion. A technical benefit may include that the risk of the latch devices accidentally being brought out of engagement with the stackable objects are reduced.

Optionally in some examples, including in at least one preferred example, the latch system may further comprise a fixing latch device comprising a first fixing latch member provided with a latch fixing member adapted to be fixed by a mating object locking element to one stackable object of the plurality of stackable objects. A technical benefit may include that the risk of the latch devices accidentally being brought out of engagement with the stackable objects are reduced.

Optionally in some examples, including in at least one preferred example, the first member first engagement portion may be a hook member and the second member first engagement portion may be a bar member and the first member second engagement portion may be a bar member. Optionally, the first member may be configured with a u-shaped cross-section at the first member first portion and/or the first member second portion. Optionally, the second member may be configured with a u-shaped cross-section at the second member first portion and/or the second member second portion. Optionally, a width extension along and at the pivot axis of the first member may be less than a corresponding width extension along and at the pivot axis of the second member. Optionally, the latch system may further comprise an end latch device. The end latch device may comprise an end member having an end member first portion and an end member second portion. Optionally, the end member first portion may be provided with an end member first engagement portion corresponding to the first member first engagement portion and the end member second portion is provided with an end member second engagement portion corresponding to the first member second engagement portion. A technical benefit may include that the latch system enables securing of the stackable objects without requiring complex mounting interfaces or threaded fasteners for each stackable object. Another technical benefit may include that the latch system enables an operator to in a simple and non-complex manner add or remove stackable objects in the stack.

According to a second aspect of the disclosure, an interlockable latch device for forming a part of the latch system according to any of the examples described herein is provided. The second aspect of the disclosure may seek to achieve a more simple and user friendly manner of securing stackable objects in a stacked configuration. A technical benefit may include that the latch device enables securing of the stackable objects without requiring complex mounting interfaces or threaded fasteners for each stackable object. Another technical benefit may include that the latch device enables an operator to in a simple and non-complex manner add or remove stackable objects in the stack. Yet another technical benefit may include that the positioning of the first member second engagement portion allows for the resiliency of the latch device to provide a clamping force securing the stackable objects relative to each other without requiring for example threaded fasteners.

According to a third aspect of the disclosure, a stacking arrangement comprising a latch system according to any of the examples described herein and a plurality of stackable objects is provided. The third aspect of the disclosure may seek to achieve a stacking arrangement which is simpler and user friendly to achieve. A technical benefit may include that the latch system enables securing of the stackable objects without requiring complex mounting interfaces or threaded fasteners for each stackable object. Another technical benefit may include that the latch system enables an operator to in a simple and non-complex manner add or remove stackable objects in the stack. Yet another technical benefit may include that the positioning of the first member second engagement portion allows for the resiliency of the latch device to provide a clamping force securing the stackable objects relative to each other without requiring for example threaded fasteners.

Optionally in some examples, including in at least one preferred example, the engagement element may be provided as a protrusion projecting from the stackable object and may comprise a recess provided between two opposing retention flanges. A distance between the two opposing retention flanges may be adapted to permit a first member second engagement portion of an interlockable latch device to enter the recess. A technical benefit may include that the two opposing retention flanges and the recess allow for the first member second engagement portion to engage the engagement element from both sides relative the stacking direction, thereby allowing for a more flexible stacking arrangement.

Optionally in some examples, including in at least one preferred example, each of the stackable objects of the plurality of stackable objects may be provided with a guide configured to prevent, at the stacked configuration, relative movement between the stackable objects in a direction transverse to a stacking direction. A technical benefit may include that the position of the stackable objects may be maintained even during challenging conditions and/or during mounting of the latch system.

Optionally in some examples, including in at least one preferred example, the guide may comprise a rim configured such that, at the stacked configuration, an adjacent stackable object to a specific stackable object is retained relative to the specific stackable object in the direction transverse to the stacking direction by the rim. A technical benefit may include that the rim may provide for a large intersecting cross-section between the stackable objects, allowing for an improved strength with regards to prevent movement in the direction transverse to the stacking direction.

Optionally in some examples, including in at least one preferred example, the guide may be a pin configured such that, at the stacked configuration, an adjacent stackable object to a specific stackable object is retained relative to the specific stackable object in the direction transverse to the stacking direction by receiving the pin in an associated opening. A technical benefit may include that the pin and associated opening enables a relatively cost-efficient solution as it does not require accurate tolerances or accurate and time consuming machining of the stackable object.

Optionally in some examples, including in at least one preferred example, the stackable objects may be battery packs for a vehicle. A technical benefit may include that a modular battery system which is easily mounted and adapted may be achieved.

According to a fourth aspect of the disclosure, a vehicle comprising a plurality of battery packs is provided. Each battery pack comprises an engagement element. The battery packs are retained in a stacked configuration by the latch system of any one of the examples described herein. The fourth aspect of the disclosure may seek to achieve a vehicle with a battery system that easily can be mounted and adapted. A technical benefit may include that the latch system enables securing of the battery packs without requiring complex mounting interfaces or threaded fasteners for each stackable object. Another technical benefit may include that the latch system enables an operator to in a simple and non-complex manner add or remove battery packs in the stack. Yet another technical benefit may include that the positioning of the first member second engagement portion allows for the resiliency of the latch device to provide a clamping force securing the battery packs relative to each other without requiring for example threaded fasteners.

According to a fifth aspect of the disclosure, a method of retaining a plurality of stackable objects in a stacked configuration is provided. Each stackable object comprises an engagement element. The method comprises providing a latch system of any one of the examples described herein. The method comprises engaging, by a first member second engagement portion of a first interlockable latch device of the interlockable latch system, an engagement element of a first stackable object of the plurality of stackable objects. The method comprises engaging, by a second member first engagement portion of a second interlockable latch device of the interlockable latch system, the first member first engagement portion of the first interlockable latch device. The method comprises engaging, by a first member second engagement portion of the second interlockable latch device, an engagement element of a second stackable object of the plurality of stackable objects. And the method comprises pivoting, the first member of the second interlockable latch device about the latch pivot axis of the second interlockable latch device away from the first stackable object. The fifth aspect of the disclosure may seek to achieve a more simple and user friendly manner of securing stackable objects in a stacked configuration. A technical benefit may include that the latch system enables securing of the stackable objects without requiring complex mounting interfaces or threaded fasteners for each stackable object. Another technical benefit may include that the latch system enables an operator to in a simple and non-complex manner add or remove stackable objects in the stack. Yet another technical benefit may include that the positioning of the first member second engagement portion allows for the resiliency of the latch device to provide a clamping force securing the stackable objects relative to each other without requiring for example threaded fasteners.

Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the apportioned drawings.
**FIG. 1** is an exemplary vehicle according to an example.
**FIG. 2** is a perspective view of a stacking arrangement according to an example.
**FIG. 3** is a more detailed perspective view of a first end portion of the stacking arrangement of **FIG. 2****.**
**FIG. 4** is another perspective view of the first end portion depicted in **FIG. 3****.**
**FIG. 5** is a more detailed perspective view of a second end portion of the stacking arrangement of **FIG. 2****.**
**FIG. 6** is a perspective view of a latch device of the stacking arrangement of **FIG. 2****.**
**FIG. 7** is a perspective view of an engagement element of a stackable object of the stacking arrangement of **FIG. 2****.**
**FIG. 8** is a flow chart of a method of retaining a plurality of stackable objects in a stacked configuration according to an example.
**FIG. 9** is another view of **FIG. 2****,** according to an example.

### DETAILED DESCRIPTION

The detailed description set forth below provides information and examples of the disclosed technology with sufficient detail to enable those skilled in the art to practice the disclosure.

Vehicles, and in particular heavy-duty vehicles, often utilize stacked objects in order to save space. Each object may be in the form of a vehicle component associated with a function of the vehicle. This is particularly the case for electrically propelled vehicles, i.e. vehicles that are propelled by means of an electrical motor. Such vehicles commonly require energy storage units in the form of batteries to power the electrical motor. The batteries are associated with challenges as they are heavy and space consuming. To more efficiently use the available space of the vehicle, the batteries are often arranged in stacks. Commonly, the batteries are arranged in vertical stacks, but horizontal stacks may also be utilized. The stacks require some form of means to secure the stacked objects to each other. A challenge with the existing solutions is that they either are very time consuming and cumbersome to use for securing the objects to each other or are limited in terms of allowing for flexibility in terms of how many objects that are to be stacked.

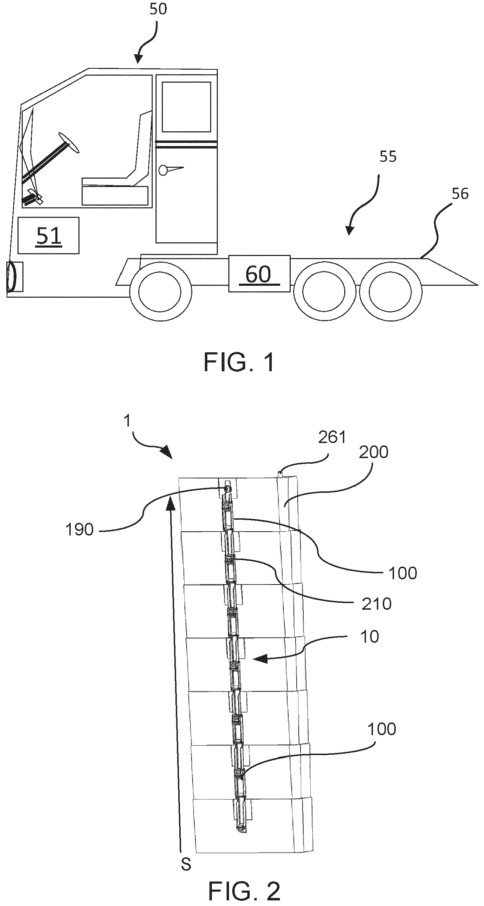

**FIG. 1** is an exemplary vehicle **50** comprising a stacking arrangement comprising a plurality of stackable objects according to an example. In the depicted example, the vehicle **50** is a truck but it may be envisioned that the vehicle may be any type of vehicle. Preferably, the vehicle may be a heavy-duty vehicle, such as truck, bus or construction equipment, among other vehicle types. It may also be envisioned that the stacking arrangement is utilized for a marine vessel such as a boat or a motor and preferably an electrical motor configured to be powered by the battery modules to be mounted in the mounting system. It may also be envisioned that the stacking arrangement may be utilized for a stationary system such as a building and/or a stationary machinery. Accordingly, the stacking arrangement may be for a vehicle **50,** marine vessel, motor or a stationary system including a building and/or a stationary machinery.

In the depicted example, the stackable objects of the stacking arrangement may be provided as battery packs **60** for the vehicle **50.** Thus, the stacking arrangement may be for an energy storage system of a vehicle **50,** marine vessel, motor or stationary system.

In the depicted example, the vehicle **50** may comprise an electric motor **51** configured to propel the vehicle **50.** The vehicle **50** may comprise a chassis **55** and the stacking arrangement, here in the form of battery packs **60** may be adapted to be mounted to said chassis **55.** In the depicted example, the chassis **55** may comprise a frame **56.** Advantageously, the stacking arrangement may be adapted to be mounted to said frame **56.**

**FIG. 2** depicts a perspective view of a stacking arrangement **1** of an example. The stacking arrangement **1** comprises a plurality of stackable objects **200.** The stacking arrangement **1** further comprises a latch system **10.** The stackable objects **200** are provided with engagement elements **210,** e.g. each stackable object **200** comprises an engagement element **210.** The engagement element **210** may be adapted to be in engagement with the latch system **10** to secure the latch system **10** to the stackable objects **200.**

The stackable objects **200** may be stacked along a stacking direction **S.** In the depicted example, the stacking direction **S** is a vertical direction but it may be envisioned that the stacking direction **S** is horizontal. A stacking direction herein refers to the longitudinal extension of the stack formed by all of the stackable objects **200** of the stacking arrangement **1.**

The stackable objects **200** of the stacking arrangement **1** depicted in **FIG. 2** are in a stacked configuration. A stacked configuration may herein refer to a state where the stackable objects **200** are arranged in a stack adjacent to each other and along the stacking direction **S.**

The stackable objects **200** may as described with reference to **FIG. 1****,** be provided as battery packs **60.** Hence, the vehicle **50** may comprise a plurality of battery packs **60.** Each battery pack **60** may comprise an engagement element **210.** The battery packs **60** may be retained in a stacked configuration by the latch system **10.**

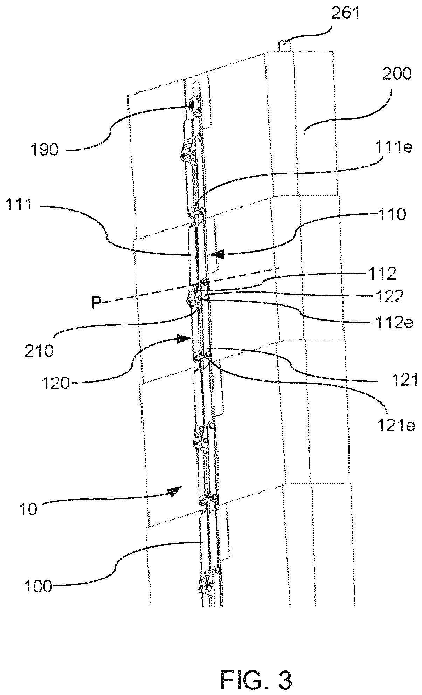

**FIG. 3** shows a part of the stacking arrangement **1** of **FIG. 2** in a more detailed perspective view. To enable easier mounting and/or prevent unwanted relative movement between the stackable objects **200,** each of the stackable objects **200** may be provided with a guide **261.**

Worded differently, each stackable object **200** may comprise a guide **261.** In an example, the guide **261** may extend in the stacking direction **S.** The guide **261** may be configured to prevent, at the stacked configuration, relative movement between the stackable objects **200** in a direction transverse to the stacking direction **S.**

The guide **261** may be provided in a multitude of ways to provide a stop for the above-referenced relative movement. In the depicted example, the guide **261** is a pin, e.g. provided as a pin. The pin **261** may be configured such that, at the stacked configuration, an adjacent stackable object **200** to a specific stackable object **200** is retained relative to the specific stackable object **200** in the direction transverse to the stacking direction **S** by receiving the pin in an associated opening. Thus, the specific stackable object **200** may be provided with the pin **261** configured such that the pin **261** may be received in an associated opening of an adjacent stackable object **200.** In the depicted example, the stacking direction **S** is vertical, the pin **261** may thus be formed as an upward facing protrusion protruding from an upper surface of the stackable object **200.** The associated opening may be in the form of a vertically extending hole extending upward from a bottom surface of the adjacent stackable object **200.** Although the depicted example only includes a single pin **261** for each stackable object, it may be envisioned that each stackable object **200** may be provided with a plurality of pins **261** and a corresponding plurality of associated openings.

In an example, the guide **261** may comprise a rim, i.e. a rim of the stackable object **200.** The rim may be configured such that, at the stacked configuration, an adjacent stackable object **200** to a specific stackable object **200** is retained relative to the specific stackable object **200** in the direction transverse to the stacking direction **S.** The rim may be configured such that, at the stacked configuration, an adjacent stackable object **200** to a specific stackable object **200** is retained relative to the specific stackable object **200** in the direction transverse to the stacking direction **S** by receiving the rim in a corresponding interface. Thus, the specific stackable object **200** may be provided with the rim configured such that the rim may be received in a corresponding interface of an adjacent stackable object **200.** In the depicted example, the stacking direction **S** is vertical, the rim may thus be formed as an upward facing flanged portion protruding from an upper surface of the stackable object **200.** The corresponding interface may be in the form of a channel provided on a bottom surface of the adjacent stackable object **200.** The extension of the channel may correspond to the shape of rim.

Further referencing **FIG. 3****,** one or more latch devices **100** for forming part of the latch system **10** are provided.

The latch system **10** is provided for retaining the plurality of stackable objects **200** in the stacked configuration. The latch system **10** comprises a plurality of interlockable latch devices **100.** The interlockable latch devices **100** comprise a first member **110** and a second member **120.**

The first member **110** has a first member first portion **111** and a first member second portion **112.** The first member first portion **111** is provided with a first member first engagement portion **111e.** The first member second portion **112** is provided with a first member second engagement portion **112e.** The first member second engagement portion **112e** is adapted to engage an engagement element **210** of one stackable object **200** of the plurality of stackable objects **200.**

The second member **120** has a second member first portion **121** and a second member second portion **122.** The second member first portion **121** is provided with a second member first engagement portion **121e.** The second member first engagement portion **121e** is adapted to be brought into engagement with a first member first engagement portion **111e** of another interlockable latch device **100.**

The first member **110** and the second member **120** are arranged to be pivotable relative each other. The first member **110** and the second member **120** are arranged to be pivotable relative each other about a latch pivot axis **P.** The latch pivot axis **P** is provided between the first member first portion **111** and the first member second portion **112** of the first member **110.** The latch pivot axis **P** is further provided at the second member second portion **122** of the second member **120.** In a locked configuration, the first member second engagement portion **112e** is arranged radially offset from the latch pivot axis **P.** In the locked configuration, the first member second engagement portion **112e** is arranged at an angle greater than 0° relative to the second member **120.**

The angle **a** may be considered an angle between the first member **110** and the second member **120** relative the pivot axis **P.** In an example, the angle **a** may be between 5 and 70 degrees. In an example, the angle a may be between 20 and 40 degrees.

A locked configuration herein refers to a state wherein the interlockable latch device **100** is in a state wherein it is interlocked to an adjacent latch device **100** and retained to the engagement element **210** of a stackable object **200.** Thus, in the locked configuration, the first member first engagement portion **111e** is in engagement with the engagement element **210** and the second member first engagement portion **121e** is in engagement with a first engagement portion **111e** of another interlockable latch device **100** such that the latch device **100** is retained relative to said another latch device **100** and the engagement element **210.**

The positioning of the first member first member second engagement portion **112e** relative the latch pivot axis **P** and the second member **120** allows for the structural resiliency of the latch device **100** to clamp the stackable objects **200** together via the engagement element **210** of said stackable objects **200.** The radially offset engagement causes induced force on the latch device **100** to clamp the latch device **100** against the stackable object **200** allowing for a more robust and durable mounting. Furthermore, the first member second engagement portion **112e** being in engagement with the engagement element **210** makes the latch device **100** self-securing and gives the operator time to mount an additional latch device **100** if needed.

The latch devices **100** may be in a resilient material such as metal, for example steel or aluminum, to enable the resiliency of the material to provide the clamping force pressing the stackable objects **200** against each other.

Further referencing **FIG. 3****,** the latch system **10** may comprise a plurality of latches **100** interlocked to each other. Accordingly, the first member first engagement portion **111e** of a first latch device **100** may be adapted to be brought into engagement with the second member first engagement portion **121e** of a second latch device **100** and the second member first engagement portion **121e** of the first latch device **100** may be adapted to be brought into engagement with the first member engagement portion **111e** of a third latch device **100.** The second and third latch may be arranged on opposite sides of the first latch relative the stacking direction **S.**

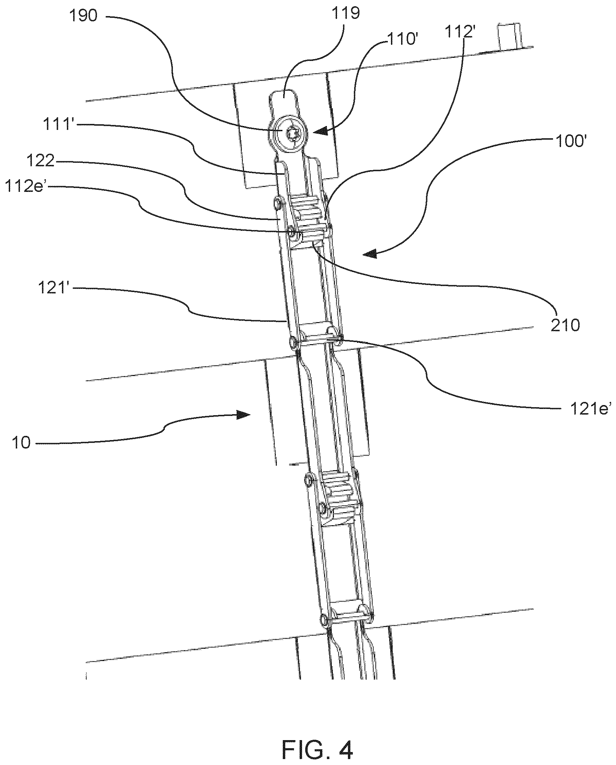

**FIG. 4** depicts a portion of the latch system **10** of **FIG. 2-3** in further detail. Notably, **FIG. 4** depicts a first end portion of the latch system **10.** The depicted interlockable latch device **100'** may be considered a fixing latch device **100'.** The fixing latch device **100',** may comprise a first member **110'** provided as a first fixing latch member **110'.** The first fixing latch member **110'** may be provided with a latch fixing member **119.** The latch fixing member **119** may be adapted to be fixed by a mating object locking element **190** to one stackable object **200** of the plurality of stackable objects **200.** In the depicted example, the fixing latch device **100'** may share the features of the previously referenced interlockable latch devices but the first member first portion **111** may in addition to or instead of the first member first engagement portion **111e** be provided with the latch fixing member **119.** Hence, the fixing latch device **100'** may comprise a first and second member in accordance with any of the examples herein. It may however be envisioned that the fixing latch device is designed and structured differently altogether than the latch devices **100.**

In the depicted example, the latch fixing member **119** is provided as a portion of the first fixing latch member **110'** provided with an aperture. The aperture is adapted to be engaged by mating object locking element **190** in the form of a fastening element such as a screw or bolt. The stackable object **200** may comprise a hole adapted to be engaged by the fastening element to fix the first fixing latch member **110'** to the stackable object **200.**

Although preferably be arranged at a first end portion of the latch system **10,** it may be envisioned that a fixing latch device **100'** may be arranged at any suitable position in the chain of latch devices **100** and/or that a plurality of fixing latch devices **100'** may be arranged at different positions in the chain of latch devices **100.**

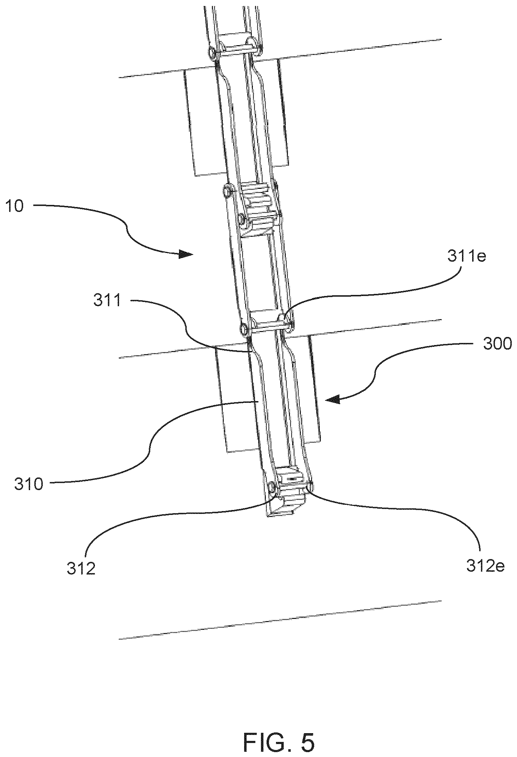

**FIG. 5** depicts a portion of the latch system **10** of **FIG. 2-3** in further detail. Notably, **FIG. 5** depicts a second end portion of the latch system **10,** opposite to the first end portion depicted in **FIG. 4****.**

As depicted in **FIG. 5****,** the latch system **10** may comprise an end latch device **300.** The end latch device **300** may share all or some of the features of the first member **110** of the latch devices **100** described herein. Hence, the end latch device **300** may comprise an end member **310.** The end member **310** may have an end member first portion **311** an end member second portion **312.** The end member first portion **311** is provided with an end member first engagement portion **311e.** The end member first engagement portion **311e** may correspond to the first member first engagement portion **111e.** The end member second portion **312** may be provided with an end member second engagement portion **312e.** The end member second engagement portion **312e** may correspond to the first member second engagement portion **112e.**

Thus, the end member first engagement portion **311e** may be adapted to be brought into engagement with a second member first engagement portion **121e** of one of the latch devices **100.** Correspondingly, the end member second engagement portion **312e** may be adapted to engage an engagement element **210** of one stackable object of the plurality of stackable objects **200.**

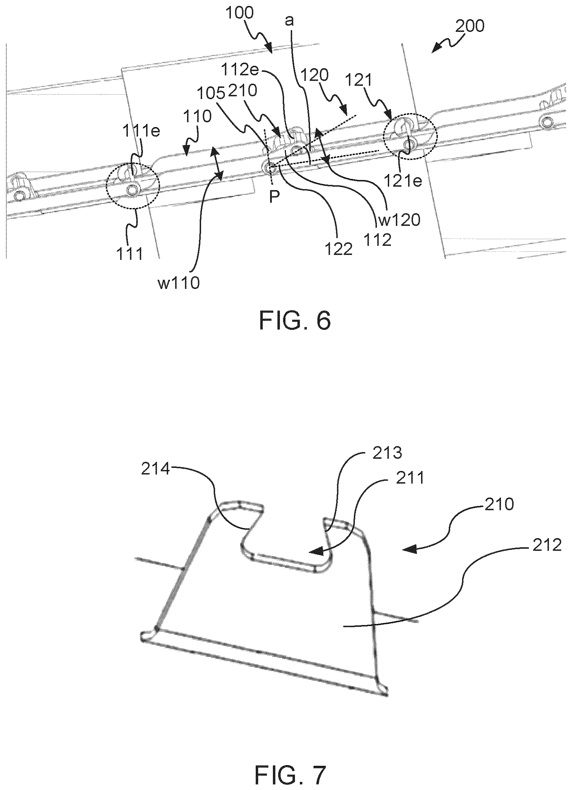

**FIG. 6** depicts a latch device **100** of the plurality of latch devices in further detail. Referencing **FIG. 6****,** the first member first engagement portion **111e** may be a hook member. The second member first engagement portion **121e** may be a bar member. Accordingly, the first member first engagement portion **111e** of one latch device **100** and a second member first engagement portion **121e** of another latch device **100** may be adapted to engage by means of the hook member gripping the bar member. As depicted, the bar member may extend substantially parallel to the pivot axis **P.**

In an example the first member second engagement portion **112e** may be a bar member. Accordingly, the bar member may be brought into engagement with the engagement element **210** by means of insertion of the bar member into the engagement element **210.** As depicted, the bar member may extend substantially parallel to the pivot axis **P.**

The first member **110** may be configured with a u-shaped cross-section at the first member first portion **111.** Additionally or alternatively, the first member **110** may be configured with a u-shaped cross section at the first member second portion **112.** Advantageously, an intermediate portion of the first member **110** extending between the end portions provided with first member first and second engagement portions may have a U-shaped cross-section.

The second member **120** may be configured with a u-shaped cross-section at the second member first portion **121.** Additionally or alternatively, the second member **120** may be configured with a u-shaped cross-section at the second member second portion **122.** Advantageously, an intermediate portion of the second member **110** extending between the end portions provided with second member first and second engagement portions may have a U-shaped cross-section.

Further referencing **FIG. 6****,** a width extension **w110** along and at the pivot axis **P** of the first member **110** may be less than a corresponding width extension **w120** along and at the pivot axis **P** of the second member **120.** Hence, at the pivot axis **P** the first member **110** may be thinner than the second member **120.**

As the skilled person realizes a pivotable connection between the first member **110** and the second member **120** may be achieved in multiple ways. In the depicted example, the first member **110** and the second member **120** are arranged to pivot relative each other by a pivot pin **105.** The pivot pin **105** may pivotably connect the first member **110** and the second member **120.** The pivot pin **105** thus form a pivotable connection between said first member **110** and second member **120.** The pivot pin **105** may be fixedly mounted to one of the first member **110** and the second member **120** and mounted to a pivot connection of the other of the first member **110** and the second member **120.**

As mentioned, the pivot connection between the first member **110** and the second member **120** may be achieved in a plurality of ways. In an example, the first member **110** and the second member **120** may be arranged to pivot relative each other by one or more rivets. The one or more rivets may pivotably connect the first member **110** and the second member 120.

**FIG. 7** depicts an engagement element **210** of a stackable object **200** in further detail. The engagement element **210** may be provided as a protrusion. The engagement element **210** may project from the stackable object **200.** In an example, the engagement element **210** is provided as an integrated part of the stackable object **200** for example by means of molding. In an example, the engagement element **210** is mounted to the stackable object **210** by means of welding or fasteners.

The engagement element **210** may comprise at least one retention flange **213, 214.** The at least one retention flange **213, 214** may be adapted to receive the first member second engagement portion **112e** of a latch device **100** to secure said latch device **100** to the stackable object **200** by means of said first member second engagement portion **112e** engaging one of said at least one retention flange **213, 214.**

In the depicted example, the engagement element **210** comprises a recess **211.** The recess **211** may be provided between two opposing retention flanges **213, 214.** The distance between the two opposing retention flanges **213, 214** is adapted to permit a first member second engagement portion **112e** of an interlockable latch device **100** to enter the recess **211.**

The opposing retention flanges **213, 214** may each comprise an angled surface extending from the recess **211.** The angled surfaces may be inclined towards each other in a direction extending away from the recess **211.** The opposing retention flanges **213, 214** may be arranged such that the distance between said opposing retention flanges decreases in the direction of a direction extending perpendicular from the pivot axis **P** and away from the recess **211.**

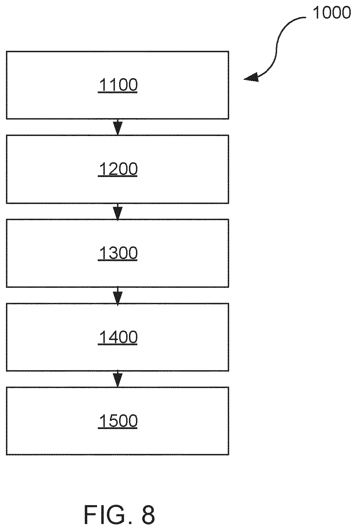

**FIG. 8** schematically depicts a method of retaining a plurality of stackable objects **200** in a stacked configuration. Each stackable object **200** may comprise an engagement element **210.**

The method **1000** may comprise providing **1100** a latch system **10.** The latch system may be a latch system according to any of the herein described examples. The method may further comprise engaging **1200** the engagement element **210** of a first stackable object of the plurality of stackable objects **200** by a first member second engagement portion **112e** of a first interlockable latch device **100** of the interlockable latch system **10.** Expressed differently, the method **1000** may comprise bringing the first member second engagement portion **112e** of the first interlockable latch device **100** into engagement with the engagement element **210** of the first stackable object **200.**

The method **1000** may further comprise engaging **1300** the first member first engagement portion **111e** of the first interlockable latch device **100** by the second member first engagement portion **121e** of a second interlockable latch device **100** of the interlockable latch system **10.** Expressed differently, the method **1000** may comprise bringing the second member first engagement portion **121** of the second interlockable latch device **100** into engagement with the first member first engagement portion **111e** of the first interlockable latch device **100.**

The method **1000** may further comprise engaging **1400** the engagement element **210** of a second stackable object of the plurality of stackable objects **200** by the first member second engagement portion **112e** of the second interlockable latch device **100.** Expressed differently, the method **1000** may comprise bringing the first member second engagement portion **112e** of the second interlockable latch device **100** into engagement with the engagement element **210** of the second stackable object **200.**

The method **1000** may further comprise pivoting **1500** the first member **110** of the second interlockable latch device **100** about the latch pivot axis **P** away from the first stackable object **200.**

In an example, the method may further comprise subsequently securing the first member **110** of the second interlockable latch device in position. In an example, this may be performed by bringing the second member first engagement portion **121e** into engagement with the first member first engagement portion **111e** of a third latch device **100.**

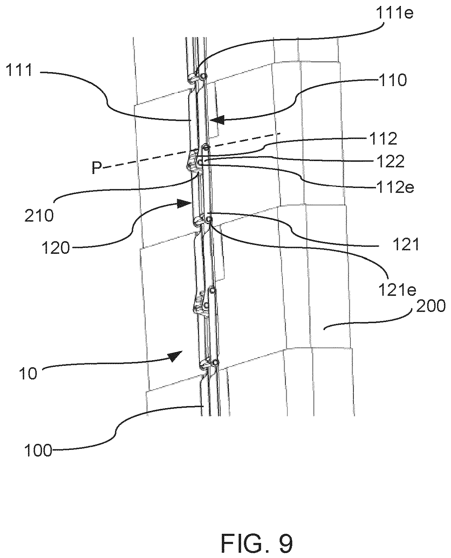

**FIG. 9** is another view of **FIG. 2** according to an example. The latch system **10** is for retaining a plurality of stackable objects **200** in a stacked configuration. The latch system **10** comprises a plurality of interlockable latch devices **100,** wherein the interlockable latch devices **100** comprises a first member **110** having a first member first portion **111** and a first member second portion **112.** The first member first portion **111** is provided with a first member first engagement portion **111e** and the first member second portion **112** is provided with a first member second engagement portion **112e** adapted to engage an engagement element **210** of one stackable object **200** of the plurality of stackable objects **200.** The latch system **10** comprises a second member **120** having a second member first portion **121** and a second member second portion **122.** The second member first portion **121** is provided with a second member first engagement portion **121e** adapted to be brought into engagement with a first member first engagement portion **111e** of another interlockable latch device **100.**

The first member **110** and the second member **120** are arranged to be pivotable relative each other about a latch pivot axis **P** provided between the first member first portion **111** and the first member second portion **112** of the first member **110** and at the second member second portion **122** of the second member **120.** The first member second engagement portion **112e** is, in a locked configuration, arranged radially offset from the latch pivot axis **P** and at an angle a greater than 0° relative to the second member **120.**

Example 1: A latch system (10) for retaining a plurality of stackable objects (200) in a stacked configuration, the latch system (10) comprises a plurality of interlockable latch devices (100), wherein the interlockable latch devices (100) comprises:
a first member (110) having a first member first portion (111) and a first member second portion (112), wherein the first member first portion (111) is provided with a first member first engagement portion (111e) and the first member second portion (112) is provided with a first member second engagement portion (112e) adapted to engage an engagement element (210) of one stackable object (200) of the plurality of stackable objects (200); and
a second member (120) having a second member first portion (121) and a second member second portion (122), wherein the second member first portion (121) is provided with a second member first engagement portion (121e) adapted to be brought into engagement with a first member first engagement portion (111e) of another interlockable latch device (100); wherein the first member (110) and the second member (120) are arranged to be pivotable relative each other about a latch pivot axis (P) provided between the first member first portion (111) and the first member second portion (112) of the first member (110) and at the second member second portion (122) of the second member (120), wherein the first member second engagement portion (112e) is, in a locked configuration, arranged radially offset from the latch pivot axis (P) and at an angle (a) greater than 0° relative to the second member (120).

Example 2: The latch system (10) of example 1, wherein the first member first engagement portion (111e) is a hook member and the second member first engagement portion (121e) is a bar member.

Example 3: The latch system (10) of example 1 or 2, wherein the first member second engagement portion (112e) is a bar member.

Example 4: The latch system (10) of any one of examples 1 to 3, wherein the first member (110) is configured with a u-shaped cross-section at the first member first portion (111) and/or the first member second portion (112).

Example 5: The latch system (10) of any one of examples 1 to 4, wherein the second member (120) is configured with a u-shaped cross-section at the second member first portion (121) and/or the second member second portion (122).

Example 6: The latch system (10) of any one of examples 1 to 5, wherein a width extension (w110) along and at the pivot axis (P) of the first member (110) is less than a corresponding width extension (w120) along and at the pivot axis (P) of the second member (120).

Example 7: The latch system (10) of any one of examples 1 to 6, wherein the first member (110) and the second member (120) are arranged to pivot relative each other by a pivot pin (105) pivotably connecting the first member (110) and the second member (120).

Example 8: The latch system (10) of any one of examples 1 to 6, wherein the first member (110) and the second member (120) are arranged to pivot relative each other by one or more rivets pivotably connecting the first member (110) and the second member (120).

Example 9: The latch system (10) of any one of examples 1 to 8, further comprising an end latch device (300) comprising an end member (310) having an end member first portion (311) and an end member second portion (312), wherein the end member first portion (311) is provided with an end member first engagement portion (311e) corresponding to the first member first engagement portion (111e) and the end member second portion (312) is provided with an end member second engagement portion (312e) corresponding to the first member second engagement portion (112e).

Example 10: The latch system (10) of any one of examples 1 to 9, further comprises a fixing latch device (100') comprising a first fixing latch member (110') provided with a latch fixing member (119) adapted to be fixed by a mating object locking element (190) to one stackable object (200) of the plurality of stackable objects (200).

Example 11: The latch system (10) of example 1, wherein the first member first engagement portion (111e) is a hook member and the second member first engagement portion (121e) is a bar member and the first member second engagement portion (112e) is a bar member, wherein the first member (110) is configured with a u-shaped cross-section at the first member first portion (111) and/or the first member second portion (112), wherein the second member (120) is configured with a u-shaped cross-section at the second member first portion (121) and/or the second member second portion (122), wherein a width extension (w110) along and at the pivot axis (P) of the first member (110) is less than a corresponding width extension (w120) along and at the pivot axis (P) of the second member (120) and wherein the latch system (10) further comprises an end latch device (300) comprising: an end member (310) having an end member first portion (311) and an end member second portion (312), wherein the end member first portion (311) is provided with an end member first engagement portion (311e) corresponding to the first member first engagement portion (111e) and the end member second portion (312) is provided with an end member second engagement portion (312e) corresponding to the first member second engagement portion (112e).

Example 12: An interlockable latch device (100) for forming part of the latch system (10) according to any one of examples 1 to 11.

Example 13: A stacking arrangement (1) comprising a latch system (10) of any one of examples 1 to 11 and a plurality of stackable objects (200), each stackable object (200) of the plurality of stackable objects (200) comprises an engagement element (210).

Example 14: The stacking arrangement (1) of example 13, wherein the engagement element (210) is provided as a protrusion (212) projecting from the stackable object (200) and comprises a recess (211) provided between two opposing retention flanges (213, 214), wherein a distance between the two opposing retention flanges (213, 214) is adapted to permit a first member second engagement portion (112e) of an interlockable latch device (100) to enter the recess (211).

Example 15: The stacking arrangement (1) of example 13 or 14, wherein each of the stackable objects (200) of the plurality of stackable objects (200) is provided with a guide (261) configured to prevent, at the stacked configuration, relative movement between the stackable objects (200) in a direction transverse to a stacking direction (S).

Example 16: The stacking arrangement (1) of example 15, wherein the guide (261) comprises a rim configured such that, at the stacked configuration, an adjacent stackable object (200) to a specific stackable object (200) is retained relative to the specific stackable object (200) in the direction transverse to the stacking direction (S) by the rim.

Example 17: The stacking arrangement (1) of example 15, wherein the guide (261) is a pin configured such that, at the stacked configuration, an adjacent stackable object to a specific stackable object (200) is retained relative to the specific stackable object (200) in the direction transverse to the stacking direction (S) by receiving the pin in an associated opening.

Example 18: The stacking arrangement (1) of any one of examples 13 to 18, wherein the stackable objects (200) are battery packs (60) for a vehicle (50).

Example 19: A vehicle (50) comprising a plurality of battery packs (60), each battery pack comprising an engagement element (210), wherein the battery packs (60) are retained in a stacked configuration by the latch system (10) of any one of examples 1 to 11.

Example 20: A method (1000) of retaining a plurality of stackable objects (200) in a stacked configuration, each stackable object (200) comprising an engagement element (210), the method (1000) comprising:
providing (1100) a latch system (10) of any one of example 1 to 11;
engaging (1200), by a first member second engagement portion (112e) of a first interlockable latch device (100) of the interlockable latch system (10), an engagement element (210) of a first stackable object of the plurality of stackable objects (200);
engaging (1300), by a second member first engagement portion (121e) of a second interlockable latch device (100) of the interlockable latch system (10), the first member first engagement portion (111e) of the first interlockable latch device (100);
engaging (1400), by a first member second engagement portion (112e) of the second interlockable latch device (100), an engagement element (210) of a second stackable object of the plurality of stackable objects (200); and
pivoting (1500), the first member (110) of the second interlockable latch device (100) about the latch pivot axis (P) of the second interlockable latch device (100) away from the first stackable object (200).

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings. In the drawings and specification, there have been disclosed aspects for purposes of illustration only and not for purposes of limitation, the scope of the disclosure being set forth in the following claims.

## Claims

1. A latch system (10) for retaining a plurality of stackable objects (200) in a stacked configuration, the latch system (10) comprises a plurality of interlockable latch devices (100), wherein the interlockable latch devices (100) comprises:
a first member (110) having a first member first portion (111) and a first member second portion (112), wherein the first member first portion (111) is provided with a first member first engagement portion (111e) and the first member second portion (112) is provided with a first member second engagement portion (112e) adapted to engage an engagement element (210) of one stackable object (200) of the plurality of stackable objects (200); and
a second member (120) having a second member first portion (121) and a second member second portion (122), wherein the second member first portion (121) is provided with a second member first engagement portion (121e) adapted to be brought into engagement with a first member first engagement portion (111e) of another interlockable latch device (100);
wherein the first member (110) and the second member (120) are arranged to be pivotable relative each other about a latch pivot axis (P) provided between the first member first portion (111) and the first member second portion (112) of the first member (110) and at the second member second portion (122) of the second member (120), wherein the first member second engagement portion (112e) is, in a locked configuration, arranged radially offset from the latch pivot axis (P) and at an angle (a) greater than 0° relative to the second member (120).

2. The latch system (10) of claim 1, wherein the first member first engagement portion (111e) is a hook member and the second member first engagement portion (121e) is a bar member.

3. The latch system (10) of claim 1 or 2, wherein the first member second engagement portion (112e) is a bar member.

4. The latch system (10) of any one of claims 1 to 3, wherein the first member (110) and the second member (120) are arranged to pivot relative each other by a pivot pin (105) pivotably connecting the first member (110) and the second member (120).

5. The latch system (10) of any one of claims 1 to 4, further comprising an end latch device (300) comprising:
an end member (310) having an end member first portion (311) and an end member second portion (312), wherein the end member first portion (311) is provided with an end member first engagement portion (311e) corresponding to the first member first engagement portion (111e) and the end member second portion (312) is provided with an end member second engagement portion (312e) corresponding to the first member second engagement portion (112e).

6. The latch system (10) of any one of claims 1 to 5, further comprises a fixing latch device (100') comprising a first fixing latch member (110') provided with a latch fixing member (119) adapted to be fixed by a mating object locking element (190) to one stackable object (200) of the plurality of stackable objects (200).

7. The latch system (10) of claim 1, wherein the first member first engagement portion (111e) is a hook member and the second member first engagement portion (121e) is a bar member and the first member second engagement portion (112e) is a bar member, wherein the first member (110) is configured with a u-shaped cross-section at the first member first portion (111) and/or the first member second portion (112), wherein the second member (120) is configured with a u-shaped cross-section at the second member first portion (121) and/or the second member second portion (122), wherein a width extension (w110) along and at the pivot axis (P) of the first member (110) is less than a corresponding width extension (w120) along and at the pivot axis (P) of the second member (120) and wherein the latch system (10) further comprises an end latch device (300) comprising:
an end member (310) having an end member first portion (311) and an end member second portion (312), wherein the end member first portion (311) is provided with an end member first engagement portion (311e) corresponding to the first member first engagement portion (111e) and the end member second portion (312) is provided with an end member second engagement portion (312e) corresponding to the first member second engagement portion (112e).

8. An interlockable latch device (100) for forming part of a latch system (10) for retaining a plurality of stackable objects (200) in a stacked configuration, the latch system (10) comprising a plurality of interlockable latch devices (100),
the interlockable latch device (100) comprising:
a first member (110) having a first member first portion (111) and a first member second portion (112), wherein the first member first portion (111) is provided with a first member first engagement portion (111e) and the first member second portion (112) is provided with a first member second engagement portion (112e) adapted to engage an engagement element (210) of one stackable object (200) of the plurality of stackable objects (200); and
a second member (120) having a second member first portion (121) and a second member second portion (122), wherein the second member first portion (121) is provided with a second member first engagement portion (121e) adapted to be brought into engagement with a first member first engagement portion (111e) of another interlockable latch device (100);
wherein the first member (110) and the second member (120) are arranged to be pivotable relative each other about a latch pivot axis (P) provided between the first member first portion (111) and the first member second portion (112) of the first member (110) and at the second member second portion (122) of the second member (120), wherein the first member second engagement portion (112e) is, in a locked configuration, arranged radially offset from the latch pivot axis (P) and at an angle (a) greater than 0° relative to the second member (120).

9. A stacking arrangement (1) comprising a latch system (10) of any one of claims 1 to 7 and a plurality of stackable objects (200), each stackable object (200) of the plurality of stackable objects (200) comprises an engagement element (210).

10. The stacking arrangement (1) of claim 9, wherein the engagement element (210) is provided as a protrusion (212) projecting from the stackable object (200) and comprises a recess (211) provided between two opposing retention flanges (213, 214), wherein a distance between the two opposing retention flanges (213, 214) is adapted to permit a first member second engagement portion (112e) of an interlockable latch device (100) to enter the recess (211).

11. The stacking arrangement (1) of claim 9 or 10, wherein each of the stackable objects (200) of the plurality of stackable objects (200) is provided with a guide (261) configured to prevent, at the stacked configuration, relative movement between the stackable objects (200) in a direction transverse to a stacking direction (S).

12. The stacking arrangement (1) of claim 11, wherein the guide (261) is a pin configured such that, at the stacked configuration, an adjacent stackable object to a specific stackable object (200) is retained relative to the specific stackable object (200) in the direction transverse to the stacking direction (S) by receiving the pin in an associated opening.

13. The stacking arrangement (1) of any one of claims 9 to 12, wherein the stackable objects (200) are battery packs (60) for a vehicle (50).

14. A vehicle (50) comprising a plurality of battery packs (60), each battery pack comprising an engagement element (210), wherein the battery packs (60) are retained in a stacked configuration by the latch system (10) of any one of claims 1 to 7.

15. A method (1000) of retaining a plurality of stackable objects (200) in a stacked configuration, each stackable object (200) comprising an engagement element (210), the method (1000) comprising:
providing (1100) a latch system (10) of any one of claim 1 to 7;
engaging (1200), by a first member second engagement portion (112e) of a first interlockable latch device (100) of the interlockable latch system (10), an engagement element (210) of a first stackable object of the plurality of stackable objects (200);
engaging (1300), by a second member first engagement portion (121e) of a second interlockable latch device (100) of the interlockable latch system (10), the first member first engagement portion (111e) of the first interlockable latch device (100);
engaging (1400), by a first member second engagement portion (112e) of the second interlockable latch device (100), an engagement element (210) of a second stackable object of the plurality of stackable objects (200); and
pivoting (1500), the first member (110) of the second interlockable latch device (100) about the latch pivot axis (P) of the second interlockable latch device (100) away from the first stackable object (200).

## Patentansprüche

1. Ein Verriegelungssystem (10) zum Halten einer Vielzahl von stapelbaren Objekten (200) in einer gestapelten Konfiguration, wobei das Verriegelungssystem (10) eine Vielzahl von miteinander verriegelbaren Verriegelungsvorrichtungen (100) umfasst, wobei die miteinander verriegelbaren Verriegelungsvorrichtungen (100) umfassen:
- ein erstes Element (110), das einen ersten Abschnitt des ersten Elements (111) und einen zweiten Abschnitt des ersten Elements (112) aufweist, wobei der erste Abschnitt des ersten Elements (111) mit einem ersten Eingriffsabschnitt des ersten Elements (111e) versehen ist und der zweite Abschnitt des ersten Elements (112) mit einem zweiten Eingriffsabschnitt des ersten Elements (112e) versehen ist, der dazu ausgelegt ist, ein Eingriffselement (210) eines stapelbaren Objekts (200) der Vielzahl von stapelbaren Objekten (200) in Eingriff zu nehmen; und
- ein zweites Element (120), das einen ersten Abschnitt des zweiten Elements (121) und einen zweiten Abschnitt des zweiten Elements (122) aufweist, wobei der erste Abschnitt des zweiten Elements (121) mit einem ersten Eingriffsabschnitt des zweiten Elements (121e) versehen ist, der dazu ausgelegt ist, mit einem ersten Eingriffsabschnitt des ersten Elements (111e) einer anderen miteinander verriegelbaren Verriegelungsvorrichtung (100) in Eingriff gebracht zu werden;
wobei das erste Element (110) und das zweite Element (120) angeordnet sind, um relativ zueinander um eine Verriegelungsschwenkachse (P) schwenkbar zu sein, die zwischen dem ersten Abschnitt des ersten Elements (111) und dem zweiten Abschnitt des ersten Elements (112) des ersten Elements (110) und an dem zweiten Abschnitt des zweiten Elements (122) des zweiten Elements (120) bereitgestellt ist, wobei der zweite Eingriffsabschnitt des ersten Elements (112e) in einer verriegelten Konfiguration radial versetzt von der Verriegelungsschwenkachse (P) und in einem Winkel (a) größer als 0° relativ zu dem zweiten Element (120) angeordnet ist.

2. Das Verriegelungssystem (10) nach Anspruch 1, wobei der erste Eingriffsabschnitt des ersten Elements (111e) ein Hakenelement ist und der erste Eingriffsabschnitt des zweiten Elements (121e) ein Stabelement ist.

3. Das Verriegelungssystem (10) nach Anspruch 1 oder 2, wobei der zweite Eingriffsabschnitt des ersten Elements (112e) ein Stabelement ist.

4. Das Verriegelungssystem (10) nach einem der Ansprüche 1 bis 3, wobei das erste Element (110) und das zweite Element (120) angeordnet sind, um relativ zueinander durch einen Schwenkstift (105) zu schwenken, der das erste Element (110) und das zweite Element (120) schwenkbar verbindet.

5. Das Verriegelungssystem (10) nach einem der Ansprüche 1 bis 4, ferner umfassend eine Endverriegelungsvorrichtung (300), umfassend:
ein Endelement (310), das einen ersten Abschnitt des Endelements (311) und einen zweiten Abschnitt des Endelements (312) aufweist, wobei der erste Abschnitt des Endelements (311) mit einem ersten Eingriffsabschnitt des Endelements (311e) versehen ist, der dem ersten Eingriffsabschnitt des ersten Elements (111e) entspricht, und der zweite Abschnitt des Endelements (312) mit einem zweiten Eingriffsabschnitt des Endelements (312e) versehen ist, der dem zweiten Eingriffsabschnitt des ersten Elements (112e) entspricht.

6. Das Verriegelungssystem (10) nach einem der Ansprüche 1 bis 5 umfasst ferner eine Befestigungs-Verriegelungsvorrichtung (100'), umfassend ein erstes Befestigungs-Verriegelungselement (110'), das mit einem Verriegelungsbefestigungselement (119) versehen ist, das dazu ausgelegt ist, durch ein Gegenobjekt-Verriegelungselement (190) an einem stapelbaren Objekt (200) der Vielzahl von stapelbaren Objekten (200) befestigt zu werden.

7. Das Verriegelungssystem (10) nach Anspruch 1, wobei der erste Eingriffsabschnitt des ersten Elements (111e) ein Hakenelement ist und der erste Eingriffsabschnitt des zweiten Elements (121e) ein Stabelement ist und der zweite Eingriffsabschnitt des ersten Elements (112e) ein Stabelement ist, wobei das erste Element (110) mit einem u-förmigen Querschnitt an dem ersten Abschnitt des ersten Elements (111) und/oder dem zweiten Abschnitt des ersten Elements (112) konfiguriert ist, wobei das zweite Element (120) mit einem u-förmigen Querschnitt an dem ersten Abschnitt des zweiten Elements (121) und/oder dem zweiten Abschnitt des zweiten Elements (122) konfiguriert ist, wobei eine Breitenerstreckung (w110) entlang und an der Schwenkachse (P) des ersten Elements (110) kleiner ist als eine entsprechende Breitenerstreckung (w120) entlang und an der Schwenkachse (P) des zweiten Elements (120) und wobei das Verriegelungssystem (10) ferner eine Endverriegelungsvorrichtung (300) umfasst, umfassend:
- ein Endelement (310), das einen ersten Abschnitt des Endelements (311) und einen zweiten Abschnitt des Endelements (312) aufweist, wobei der erste Abschnitt des Endelements (311) mit einem ersten Eingriffsabschnitt des Endelements (311e) versehen ist, der dem ersten Eingriffsabschnitt des ersten Elements (111e) entspricht, und
- der zweite Abschnitt des Endelements (312) mit einem zweiten Eingriffsabschnitt des Endelements (312e) versehen ist, der dem zweiten Eingriffsabschnitt des ersten Elements (112e) entspricht.

8. Eine miteinander verriegelbare Verriegelungsvorrichtung (100) zum Bilden eines Teils eines Verriegelungssystems (10) zum Halten einer Vielzahl von stapelbaren Objekten (200) in einer gestapelten Konfiguration, wobei das Verriegelungssystem (10) eine Vielzahl von miteinander verriegelbaren Verriegelungsvorrichtungen (100) umfasst, wobei die miteinander verriegelbare Verriegelungsvorrichtung (100) umfasst:
- ein erstes Element (110), das einen ersten Abschnitt des ersten Elements (111) und einen zweiten Abschnitt des ersten Elements (112) aufweist, wobei der erste Abschnitt des ersten Elements (111) mit einem ersten Eingriffsabschnitt des ersten Elements (111e) versehen ist und der zweite Abschnitt des ersten Elements (112) mit einem zweiten Eingriffsabschnitt des ersten Elements (112e) versehen ist, der dazu ausgelegt ist, ein Eingriffselement (210) eines stapelbaren Objekts (200) der Vielzahl von stapelbaren Objekten (200) in Eingriff zu nehmen; und
- ein zweites Element (120), das einen ersten Abschnitt des zweiten Elements (121) und einen zweiten Abschnitt des zweiten Elements (122) aufweist, wobei der erste Abschnitt des zweiten Elements (121) mit einem ersten Eingriffsabschnitt des zweiten Elements (121e) versehen ist, der dazu ausgelegt ist, mit einem ersten Eingriffsabschnitt des ersten Elements (111e) einer anderen miteinander verriegelbaren Verriegelungsvorrichtung (100) in Eingriff gebracht zu werden;
wobei das erste Element (110) und das zweite Element (120) angeordnet sind, um relativ zueinander um eine Verriegelungsschwenkachse (P) schwenkbar zu sein, die zwischen dem ersten Abschnitt des ersten Elements (111) und dem zweiten Abschnitt des ersten Elements (112) des ersten Elements (110) und an dem zweiten Abschnitt des zweiten Elements (122) des zweiten Elements (120) bereitgestellt ist, wobei der zweite Eingriffsabschnitt des ersten Elements (112e) in einer verriegelten Konfiguration radial versetzt von der Verriegelungsschwenkachse (P) und in einem Winkel (a) größer als 0° relativ zu dem zweiten Element (120) angeordnet ist.

9. Eine Stapelanordnung (1), umfassend ein Verriegelungssystem (10) nach einem der Ansprüche 1 bis 7 und eine Vielzahl von stapelbaren Objekten (200), wobei jedes stapelbare Objekt (200) der Vielzahl von stapelbaren Objekten (200) ein Eingriffselement (210) umfasst.

10. Die Stapelanordnung (1) nach Anspruch 9, wobei das Eingriffselement (210) als ein Vorsprung (212) bereitgestellt ist, der von dem stapelbaren Objekt (200) vorsteht, und umfasst eine Aussparung (211), die zwischen zwei gegenüberliegenden Halteflanschen (213, 214) bereitgestellt ist, wobei ein Abstand zwischen den zwei gegenüberliegenden Halteflanschen (213, 214) dazu ausgelegt ist, einem zweiten Eingriffsabschnitt des ersten Elements (112e) einer miteinander verriegelbaren Verriegelungsvorrichtung (100) zu gestatten, in die Aussparung (211) einzutreten.

11. Die Stapelanordnung (1) nach Anspruch 9 oder 10, wobei jedes der stapelbaren Objekte (200) der Vielzahl von stapelbaren Objekten (200) mit einer Führung (261) versehen ist, die konfiguriert ist, in der gestapelten Konfiguration eine relative Bewegung zwischen den stapelbaren Objekten (200) in einer Richtung quer zu einer Stapelrichtung (S) zu verhindern.

12. Die Stapelanordnung (1) nach Anspruch 11, wobei die Führung (261) ein Stift ist, der derart konfiguriert ist, dass in der gestapelten Konfiguration ein zu einem bestimmten stapelbaren Objekt (200) benachbartes stapelbares Objekt relativ zu dem bestimmten stapelbaren Objekt (200) in der Richtung quer zu der Stapelrichtung (S) durch Aufnehmen des Stifts in einer zugehörigen Öffnung gehalten wird.

13. Die Stapelanordnung (1) nach einem der Ansprüche 9 bis 12, wobei die stapelbaren Objekte (200) Batteriepakete (60) für ein Fahrzeug (50) sind.

14. Ein Fahrzeug (50), umfassend eine Vielzahl von Batteriepaketen (60), wobei jedes Batteriepaket ein Eingriffselement (210) umfasst, wobei die Batteriepakete (60) in einer gestapelten Konfiguration durch das Verriegelungssystem (10) nach einem der Ansprüche 1 bis 7 gehalten werden.

15. Ein Verfahren (1000) zum Halten einer Vielzahl von stapelbaren Objekten (200) in einer gestapelten Konfiguration, wobei jedes stapelbare Objekt (200) ein Eingriffselement (210) umfasst, wobei das Verfahren (1000) umfasst:
- Bereitstellen (1100) eines Verriegelungssystems (10) nach einem der Ansprüche 1 bis 7;
- In-Eingriff-Bringen (1200), durch einen zweiten Eingriffsabschnitt des ersten Elements (112e) einer ersten miteinander verriegelbaren Verriegelungsvorrichtung (100) des miteinander verriegelbaren Verriegelungssystems (10), eines Eingriffselements (210) eines ersten stapelbaren Objekts der Vielzahl von stapelbaren Objekten (200);
- In-Eingriff-Bringen (1300), durch einen ersten Eingriffsabschnitt des zweiten Elements (121e) einer zweiten miteinander verriegelbaren Verriegelungsvorrichtung (100) des miteinander verriegelbaren Verriegelungssystems (10), des ersten Eingriffsabschnitts des ersten Elements (111e) der ersten miteinander verriegelbaren Verriegelungsvorrichtung (100);
- In-Eingriff-Bringen (1400), durch einen zweiten Eingriffsabschnitt des ersten Elements (112e) der zweiten miteinander verriegelbaren Verriegelungsvorrichtung (100), eines Eingriffselements (210) eines zweiten stapelbaren Objekts der Vielzahl von stapelbaren Objekten (200); und
- Schwenken (1500), des ersten Elements (110) der zweiten miteinander verriegelbaren Verriegelungsvorrichtung (100) um die Verriegelungsschwenkachse (P) der zweiten miteinander verriegelbaren Verriegelungsvorrichtung (100) weg von dem ersten stapelbaren Objekt (200).

## Revendications

1. Un système de verrouillage (10) pour retenir une pluralité d'objets empilables (200) dans une configuration empilée, le système de verrouillage (10) comprend une pluralité de dispositifs de verrouillage interverrouillables (100), dans lequel les dispositifs de verrouillage interverrouillables (100) comprend :
- un premier élément (110) ayant une première partie de premier élément (111) et une deuxième partie de premier élément (112), dans lequel la première partie de premier élément (111) est pourvue d'une première partie de mise en prise de premier élément (111e) et la deuxième partie de premier élément (112) est pourvue d'une deuxième partie de mise en prise de premier élément (112e) adaptée pour venir en prise avec un élément de mise en prise (210) d'un objet empilable (200) de la pluralité d'objets empilables (200) ; et
- un deuxième élément (120) ayant une première partie de deuxième élément (121) et une deuxième partie de deuxième élément (122), dans lequel la première partie de deuxième élément (121) est pourvue d'une première partie de mise en prise de deuxième élément (121e) adaptée pour être amenée en prise avec une première partie de mise en prise de premier élément (111e) d'un autre dispositif de verrouillage interverrouillable (100) ;
dans lequel le premier élément (110) et le deuxième élément (120) sont agencés pour pouvoir pivoter l'un par rapport à l'autre autour d'un axe de pivotement de verrouillage (P) prévu entre la première partie de premier élément (111) et la deuxième partie de premier élément (112) du premier élément (110) et au niveau de la deuxième partie de deuxième élément (122) du deuxième élément (120), dans lequel la deuxième partie de mise en prise de premier élément (112e) est, dans une configuration verrouillée, agencée de manière décalée radialement par rapport à l'axe de pivotement de verrouillage (P) et à un angle (a) supérieur à 0° par rapport au deuxième élément (120).

2. Le système de verrouillage (10) de la revendication 1, dans lequel la première partie de mise en prise de premier élément (111e) est un élément de crochet et la première partie de mise en prise de deuxième élément (121e) est un élément de barre.

3. Le système de verrouillage (10) de la revendication 1 ou 2, dans lequel la deuxième partie de mise en prise de premier élément (112e) est un élément de barre.

4. Le système de verrouillage (10) de l'une quelconque des revendications 1 à 3, dans lequel le premier élément (110) et le deuxième élément (120) sont agencés pour pivoter l'un par rapport à l'autre par une broche de pivotement (105) reliant de manière pivotante le premier élément (110) et le deuxième élément (120).

5. Le système de verrouillage (10) de l'une quelconque des revendications 1 à 4, comprenant en outre un dispositif de verrouillage d'extrémité (300) comprenant :
- un élément d'extrémité (310) ayant une première partie d'élément d'extrémité (311) et une deuxième partie d'élément d'extrémité (312), dans lequel la première partie d'élément d'extrémité (311) est pourvue d'une première partie de mise en prise d'élément d'extrémité (311e) correspondant à la première partie de mise en prise de premier élément (111e) et la deuxième partie d'élément d'extrémité (312) est pourvue d'une deuxième partie de mise en prise d'élément d'extrémité (312e) correspondant à la deuxième partie de mise en prise de premier élément (112e).

6. Le système de verrouillage (10) de l'une quelconque des revendications 1 à 5, comprend en outre un dispositif de verrouillage de fixation (100') comprenant un premier élément de verrouillage de fixation (110') pourvu d'un élément de fixation de verrouillage (119) adapté pour être fixé par un élément de verrouillage d'objet correspondant (190) à un objet empilable (200) de la pluralité d'objets empilables (200).

7. Le système de verrouillage (10) de la revendication 1, dans lequel la première partie de mise en prise de premier élément (111e) est un élément de crochet et la première partie de mise en prise de deuxième élément (121e) est un élément de barre et la deuxième partie de mise en prise de premier élément (112e) est un élément de barre, dans lequel le premier élément (110) est configuré avec une section transversale en forme de u au niveau de la première partie de premier élément (111) et/ou de la deuxième partie de premier élément (112), dans lequel le deuxième élément (120) est configuré avec une section transversale en forme de u au niveau de la première partie de deuxième élément (121) et/ou de la deuxième partie de deuxième élément (122), dans lequel une extension en largeur (w110) le long de et au niveau de l'axe de pivotement (P) du premier élément (110) est inférieure à une extension en largeur correspondante (w120) le long de et au niveau de l'axe de pivotement (P) du deuxième élément (120) et dans lequel le système de verrouillage (10) comprend en outre un dispositif de verrouillage d'extrémité (300) comprenant :
- un élément d'extrémité (310) ayant une première partie d'élément d'extrémité (311) et une deuxième partie d'élément d'extrémité (312), dans lequel la première partie d'élément d'extrémité (311) est pourvue d'une première partie de mise en prise d'élément d'extrémité (311e) correspondant au premier élément premier partie de mise en prise (111e) et la deuxième partie d'élément d'extrémité (312) est pourvue d'une deuxième partie de mise en prise d'élément d'extrémité (312e) correspondant à la deuxième partie de mise en prise de premier élément (112e).

8. Un dispositif de verrouillage interverrouillable (100) pour former une partie d'un système de verrouillage (10) pour retenir une pluralité d'objets empilables (200) dans une configuration empilée, le système de verrouillage (10) comprenant une pluralité de dispositifs de verrouillage interverrouillables (100), le dispositif de verrouillage interverrouillable (100) comprenant :
- un premier élément (110) ayant une première partie de premier élément (111) et une deuxième partie de premier élément (112), dans lequel la première partie de premier élément (111) est pourvue d'une première partie de mise en prise de premier élément (111e) et la deuxième partie de premier élément (112) est pourvue d'une deuxième partie de mise en prise de premier élément (112e) adaptée pour venir en prise avec un élément de mise en prise (210) d'un objet empilable (200) de la pluralité d'objets empilables (200) ; et
- un deuxième élément (120) ayant une première partie de deuxième élément (121) et une deuxième partie de deuxième élément (122), dans lequel la première partie de deuxième élément (121) est pourvue d'une première partie de mise en prise de deuxième élément (121e) adaptée pour être amenée en prise avec une première partie de mise en prise de premier élément (111e) d'un autre dispositif de verrouillage interverrouillable (100) ;
dans lequel le premier élément (110) et le deuxième élément (120) sont agencés pour pouvoir pivoter l'un par rapport à l'autre autour d'un axe de pivotement de verrouillage (P) prévu entre la première partie de premier élément (111) et la deuxième partie de premier élément (112) du premier élément (110) et au niveau de la deuxième partie de deuxième élément (122) du deuxième élément (120), dans lequel la deuxième partie de mise en prise de premier élément (112e) est, dans une configuration verrouillée, agencée de manière décalée radialement par rapport à l'axe de pivotement de verrouillage (P) et à un angle (a) supérieur à 0° par rapport au deuxième élément (120).

9. Un agencement d'empilage (1) comprenant un système de verrouillage (10) de l'une quelconque des revendications 1 à 7 et une pluralité d'objets empilables (200), chaque objet empilable (200) de la pluralité d'objets empilables (200) comprend un élément de mise en prise (210).

10. L'agencement d'empilage (1) de la revendication 9, dans lequel l'élément de mise en prise (210) est prévu sous la forme d'une saillie (212) faisant saillie depuis l'objet empilable (200) et comprend un évidement (211) prévu entre deux brides de retenue opposées (213, 214), dans lequel une distance entre les deux brides de retenue opposées (213, 214) est adaptée pour permettre à une deuxième partie de mise en prise de premier élément (112e) d'un dispositif de verrouillage interverrouillable (100) d'entrer dans l'évidement (211).

11. L'agencement d'empilage (1) de la revendication 9 ou 10, dans lequel chacun des objets empilables (200) de la pluralité d'objets empilables (200) est pourvu d'un guide (261) configuré pour empêcher, au niveau de la configuration empilée, un mouvement relatif entre les objets empilables (200) dans une direction transversale à une direction d'empilage (S).

12. L'agencement d'empilage (1) de la revendication 11, dans lequel le guide (261) est une broche configurée de telle sorte que, au niveau de la configuration empilée, un objet empilable adjacent à un objet empilable spécifique (200) est retenu par rapport à l'objet empilable spécifique (200) dans la direction transversale à la direction d'empilage (S) par réception de la broche dans une ouverture associée.

13. L'agencement d'empilage (1) de l'une quelconque des revendications 9 à 12, dans lequel les objets empilables (200) sont des blocs-batteries (60) pour un véhicule (50).

14. Un véhicule (50) comprenant une pluralité de blocs-batteries (60), chaque bloc-batterie comprenant un élément de mise en prise (210), dans lequel les blocs-batteries (60) sont retenus dans une configuration empilée par le système de verrouillage (10) de l'une quelconque des revendications 1 à 7.

15. Un procédé (1000) de retenue d'une pluralité d'objets empilables (200) dans une configuration empilée, chaque objet empilable (200) comprenant un élément de mise en prise (210), le procédé (1000) comprenant :
- la fourniture (1100) d'un système de verrouillage (10) de l'une quelconque des revendications 1 à 7 ;
- la mise en prise (1200), par une deuxième partie de mise en prise de premier élément (112e) d'un premier dispositif de verrouillage interverrouillable (100) du système de verrouillage interverrouillable (10), avec un élément de mise en prise (210) d'un premier objet empilable de la pluralité d'objets empilables (200) ;
- la mise en prise (1300), par une première partie de mise en prise de deuxième élément (121e) d'un deuxième dispositif de verrouillage interverrouillable (100) du système de verrouillage interverrouillable (10), avec la première partie de mise en prise de premier élément (111e) du premier dispositif de verrouillage interverrouillable (100) ;
- la mise en prise (1400), par une deuxième partie de mise en prise de premier élément (112e) du deuxième dispositif de verrouillage interverrouillable (100), avec un élément de mise en prise (210) d'un deuxième objet empilable de la pluralité d'objets empilables (200) ; et
- le pivotement (1500), du premier élément (110) du deuxième dispositif de verrouillage interverrouillable(100) autour de l'axe de pivotement de verrouillage (P) du deuxième dispositif de verrouillage interverrouillable (100) à l'écart du premier objet empilable (200).
